# EUROPEAN PATENT APPLICATION

(11) **EP 4 604 224 A1**
(43) Date of publication of application: **20.08.2025**
(21) Application number: 23877769.2
(22) Date of filing: 13.10.2023
(51) Int. Cl.: H01M 10/04, H01M 50/59, H01M 50/586, H01M 10/42, H01M 50/531

(54) **ELECTRODE ASSEMBLY AND SECONDARY BATTERY INCLUDING SAME**

(30) Priority: 14.10.2022 KR 20220132752
(71) Applicant: LG Energy Solution, Ltd., Seoul 07335 (KR)
(72) Inventor: PARK, Ji Sung, Daejeon 34122 (KR)
(74) Representative: Goddar, Heinz J.
(86) International application number: PCT/KR2023/015881
(87) International publication number: WO 2024/080846

(57) **Abstract**

According to the present invention, as a usage time of a secondary battery increases, a deformable part may be deformed to suppress deformation near an end of a positive electrode, thereby preventing an adjacent separator from being damaged.

In an electrode assembly having a structure, in which a first electrode sheet, a second electrode sheet, and a separator disposed between the first electrode sheet and the second electrode sheet are wound together according to the present invention, the first electrode sheet may include a deformable part disposed to be spaced a predetermined distance from one end of the second electrode sheet in a winding direction and having a shape that protrudes toward a central portion with respect to the wound state.

## Description

### TECHNICAL FIELD

### CROSS-REFERENCE TO RELATED APPLICATION

The present application claims the benefit of the priority of Korean Patent Application Nos. 10-2022-0132752, filed on October 14, 2022, and 10-2023-0137082, filed on October 13, 2023, which are hereby incorporated by reference in their entirety.

### TECHNICAL FIELD

The present invention relates to an electrode assembly and a secondary battery including the same.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

A secondary battery may be classified into a cylindrical cell in which the electrode assembly is accommodated in a cylindrical metal can, a prismatic battery in which the electrode assembly is built into a prismatic metal can, and a pouch-type battery in which the electrode assembly is built into a pouch-type case of aluminum laminated sheets depending on shapes of the battery case.

Among these, the cylindrical battery may have a jelly-roll type electrode assembly in which a positive electrode, a negative electrode, and a separator are wound together and disposed inside the case.

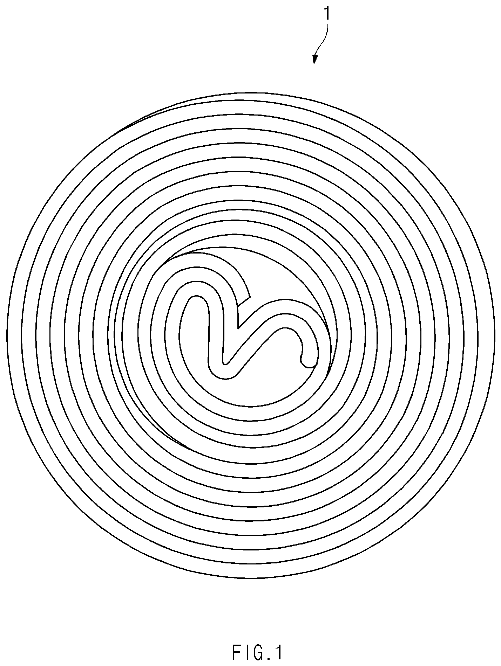

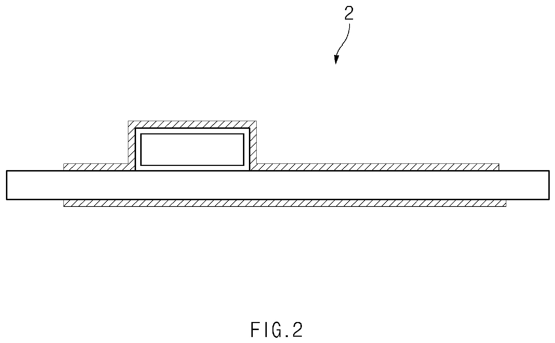

FIG. 1 is a schematic cross-sectional view illustrating a modified example of an electrode assembly 1 according to the related art, and FIG. 2 is a schematic side view of a negative electrode 2 constituting an electrode assembly 1 according to the related art.

The electrode assembly 1 provided in the cylindrical secondary battery according to the related art may have a structure in which a positive electrode, a negative electrode, and a separator are wound together. Here, based on the state in which the electrode assembly 1 is wound, the positive electrode may be wound later than the negative electrode so that one end of the positive electrode is disposed outward from a central portion than the one end of the negative electrode.

Referring to FIG. 1, a shape of the electrode assembly 1 may be deformed due to an empty space defined in the central portion depending on the use in the secondary battery according to the related art. Particularly, the shape of the electrode assembly 1 of the cylindrical secondary battery according to the related art is most deformed mainly at an end of the positive electrode. Thus, there is a problem in which the deformed end of the positive electrode damages the adjacent separator. In addition, as a result, there are problems in that short circuit, etc. occurs, a lifespan of the secondary battery is reduced, and performance of the secondary battery is deteriorated.

Referring to FIG. 2, the negative electrode 2 provided in the electrode assembly 1 of the cylindrical secondary battery according to the related art may have a shape in which a negative electrode tab is disposed in a substantially plate-shaped rectangular parallelepiped. In addition, a tape may be attached to one end. Specifically, the tape may refer to an insulating tape for insulation. Here, the tape may play a role such as securing insulation performance and protecting the negative electrode tab. Thus, the negative electrode 2 according to the related art does not have a structure for preventing the adjacent separator from being damaged by both deformed ends due to the use of the secondary battery.

Thus, there is a need for an electrode assembly that is capable of reducing a risk of damage of the separator by both the ends due to the deformation of the electrode assembly, and a secondary battery including the same.

### DISCLOSURE OF THE INVENTION

### TECHNICAL PROBLEM

The present invention is devised to solve the above problems, and an object of the present invention is to provide an electrode assembly, which is capable of preventing an adjacent separator from being damaged due to deformation of both ends to improve safety and performance, and a secondary battery including the same.

### TECHNICAL SOLUTION

In an electrode assembly having a structure, in which a first electrode sheet, a second electrode sheet, and a separator disposed between the first electrode sheet and the second electrode sheet are wound together according to the present invention, the first electrode sheet may include a deformable part disposed to be spaced a predetermined distance from one end of the second electrode sheet in a winding direction and having a shape that protrudes toward a central portion with respect to the wound state.

The first electrode sheet may include a non-coating portion disposed on one end and having a shape in which an electrode tab is provided on one surface of a collector, and a coating portion having a shape in which an active material is applied on each of both surfaces of the collector.

The second electrode sheet may be disposed at a position that faces the coating portion of the first electrode sheet with the separator therebetween.

The deformable part may be disposed to be spaced apart from the electrode tab between the electrode tab and the coating portion in the non-coating portion.

The first electrode sheet may further include a cover part attached to the non-coating portion, and the cover part may have thermosetting properties.

The cover part may be attached at least once or more.

The cover part may have a thickness of 40 µm or more to 100 µm or less.

The cover part may include a first cover part attached to one surface of the non-coating portion to cover a portion of the electrode tab, and a second cover part attached to the other surface of the non-coating portion.

The first cover part may be attached by a length less than that of the second cover part.

The first electrode sheet may further include a fixing part attached to a surface of the deformable part that is opposite to a direction in which the deformable part protrudes.

The deformable part may have a shape bent while being maintained at a constant curvature radius.

The deformable part may have a curvature radius of 0.05 mm or more and 0.8 mm or less.

The first electrode sheet may be induced so that a degree of deformation of the deformable part increases as a usage time increases.

A secondary battery according to the present invention may include an electrode assembly having a structure in which a first electrode sheet, a second electrode sheet, and a separator disposed between the first electrode sheet and the second electrode sheet are wound together, and an exterior configured to accommodate the electrode assembly therein, wherein the first electrode sheet comprises a deformable part disposed to be spaced a predetermined distance from one end of the second electrode sheet and having a shape that protrudes toward a central portion with respect to the wound state.

### ADVANTAGEOUS EFFECTS

In the electrode assembly having a structure, in which the first electrode sheet, the second electrode sheet, and the separator disposed between the first electrode sheet and the second electrode sheet are wound together, according to the present invention, the first electrode sheet may include the deformable part disposed to be spaced a predetermined distance from the one end of the second electrode sheet in the winding direction and having the shape that protrudes toward the central portion with respect to the wound state.

Thus, as the usage time of the secondary battery increases, the deformable part may be deformed to suppress the deformation near the end of the positive electrode, thereby preventing the adjacent separator from being damaged.

In addition, the separator may be prevented from being damaged to improve the safety and performance of the secondary battery including the electrode assembly.

The effects of the prevent invention are not limited by the aforementioned description, and thus, more varied effects are involved in this specification.

### BRIEF DESCRIPTION OF THE DRAWINGS

FIG. 1 is a schematic cross-sectional view illustrating a modified example of an electrode assembly according to a related art.
FIG. 2 is a schematic side view of a negative electrode constituting an electrode assembly according to the related art.
FIG. 3 is a schematic cross-sectional view illustrating a state in which an electrode assembly is wound according to Embodiment 1 of the present invention.
FIG. 4 is a schematic exploded view illustrating a state before the electrode assembly is wound according to Embodiment 1 of the present invention.
FIG. 5 is a schematic side view of a first electrode sheet according to Embodiment 1 of the present invention.
FIG. 6 is a schematic side view of a first electrode sheet according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

The present invention provides an electrode assembly 10 as Embodiment 1.

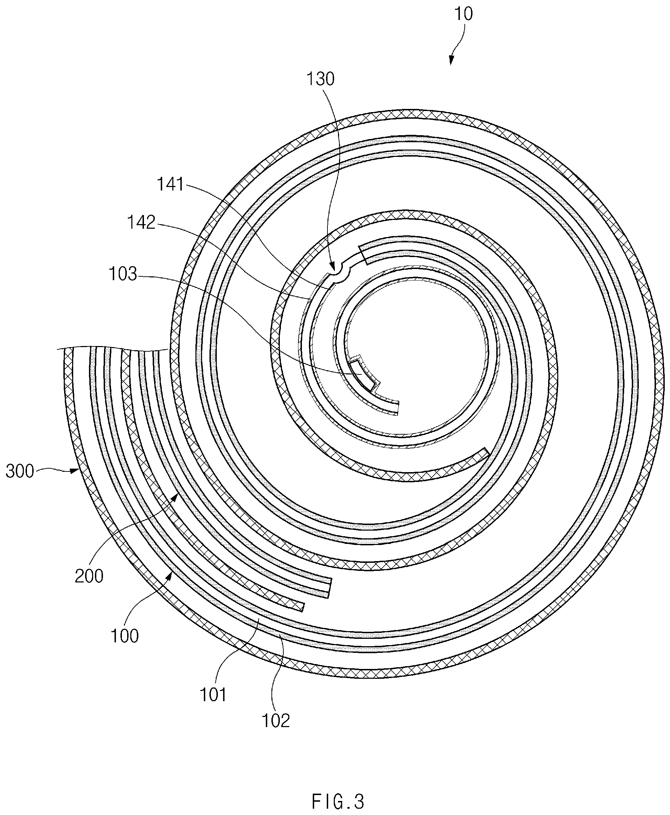

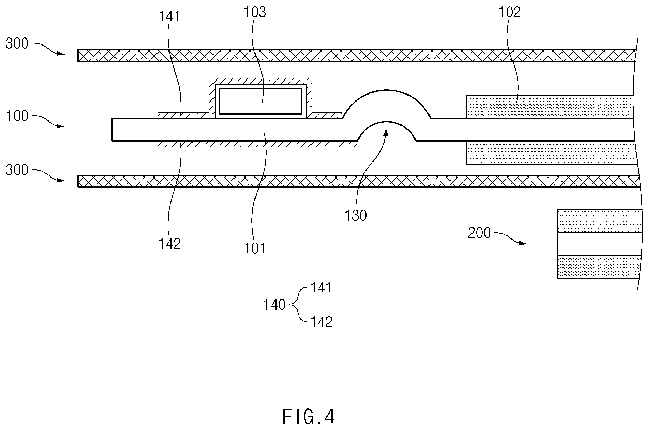

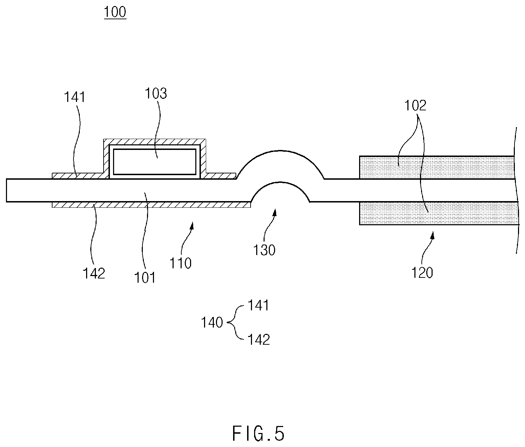

FIG. 3 is a schematic cross-sectional view illustrating a state in which the electrode assembly 10 is wound according to Embodiment 1 of the present invention. In addition, FIG. 4 is a schematic exploded view illustrating a state before the electrode assembly 10 is wound according to Embodiment 1 of the present invention, and FIG. 5 is a schematic side view of a first electrode sheet 100 according to Embodiment 1 of the present invention.

The electrode assembly 10 according to Embodiment 1 of the present invention may be used to manufacture a secondary battery. Here, the electrode assembly 10 may refer to an electrode assembly having a wound structure, and the secondary battery may refer to a cylindrical secondary battery.

Referring to FIG. 3, the electrode assembly 10 according to Embodiment 1 of the present invention may include a first electrode sheet 100, a second electrode sheet 200, and a separator 300. Specifically, the electrode assembly 10 may have a structure in which a separator 300 is disposed between the first electrode sheet 100 and the second electrode sheet 200, and the first electrode sheet 100, the second electrode sheet 200, and the separator 300 are wound together. Here, the first electrode sheet 100 may refer to a negative electrode sheet, and the second electrode sheet 200 may refer to a positive electrode sheet.

The electrode assembly 1 according to the related art had a problem in which deformation near one end of the positive electrode sheet is seriously deformed as the secondary battery is used. Thus, as an example of a configuration for preventing the deformation near one end of the positive electrode sheet, the first electrode sheet 100 of the electrode assembly 10 according to Embodiment 1 of the present invention may include a deformable part 130.

The deformable part 130 of the first electrode sheet 100 may be disposed to be spaced a predetermined distance from one end of the second electrode sheet 200 and may have a shape that protrudes toward a central portion with respect to the wound state. Specifically, the deformable part 130 of the first electrode sheet 100 may be disposed to be spaced a predetermined distance from one end of the second electrode sheet 200 in a winding direction. The deformable part 130 may serve to be deformed first to prevent one end of the second electrode sheet 200 from being deformed. The first electrode sheet 100 according to Embodiment 1 of the present invention may induce a degree of deformation of the deformable part 130 to increase as the usage time of the secondary battery increases. Referring to FIG. 3, it is seen that in the electrode assembly 10 that is in the wound state, the deformable part 130 is disposed at a position spaced apart from one end of the second electrode sheet 200 in the winding direction. In this regard, when a process of deforming the electrode assembly 10 inside a cylindrical secondary battery is observed through an experiment, it may be seen that the degree of deformation continues to increase at a portion at which the deformation occurs. That is, as the usage time increases, the deformation of the electrode assembly 10 may become more severe at the deformable part. In a case in which there is no deformable part 130, the deformation near one end of the second electrode sheet 200 may become more severe due to the use of the secondary battery, and the adjacent separator 300 may be damaged by the one end of the deformed second electrode sheet 200. Thus, the first electrode sheet 100 of the electrode assembly 10 according to Embodiment 1 of the present invention may be disposed to be spaced a predetermined distance from the one end of the second electrode sheet 200 in the winding direction so that other portions other than the one end of the second electrode sheet 200 is severely deformed to prevent the deformation near the one end of the second electrode sheet 200 from occurring. This may prevent the separator from being damaged and prevents additional problems such as short circuit from occurring due to the damage to the separator.

The shape of the deformable part 130 of the first electrode sheet 100 may vary, but the deformable part 130 according to Embodiment 1 of the present invention may have a curved shape while being maintained at a constant curvature radius. Specifically, the deformable part 130 may have a substantially semicircular shape. Preferably, the curvature radius of the deformable part 130 may be 0.05 mm or more and 0.8 mm or less.

The electrode assembly 10 provided inside the cylindrical secondary battery may have a wound jelly-roll shape. To generate this form, the first electrode sheet 100, the second electrode sheet 200, and the separator 300, each of which has an approximately sheet shape, may be wound together. Here, a core having an approximately cylindrical shape may be disposed therein for winding. When the deformable part 130 has an approximately semicircular shape, the deformed part 130 may be formed through a relatively simple process by using the core. Specifically, before being wound using the core, the deformable part 130 may be formed by pressing a portion of the first electrode sheet 100 at a position, at which the deformable part 130 is to be formed, by using the core. This is merely an example of forming the deformable part 130, and the deformable part 130 may be formed through other methods.

The deformable part 130 having the substantially semicircular shape may be disposed on the first electrode sheet 100 using a cylindrical rod other than the core. Here, the deformable part 130 may not need to be formed too large so as not to interfere with the winding. This is because if the curvature radius of the deformable part 130 becomes too large, problems may occur in the winding process of forming the electrode assembly 10. In consideration of this problem, the deformable part 130 may be provided to have a curvature radius that is approximately half or less of a radius of the rod. In this regard, since a core having a typical radius of approximately 1.6 mm is used in the winding process, the preferred curvature radius of the deformable part 130 may be approximately 0.8 mm or less when considering the winding form.

On the other hand, if the curvature radius of the deformed part 130 is too small, an effect of the present invention through the deformed part 130 may not be achieved. Thus, the curvature radius of the deformable part 130, which has the substantially semicircular shape, may be approximately 0.05 mm or more.

Referring to FIGS. 4 and 5, the first electrode sheet 100 of the electrode assembly 10 according to Embodiment 1 of the present invention may include a non-coating portion 110 and a coating portion 120. Specifically, the non-coating portion 110 of the first electrode sheet 100 may be disposed on one end and may have a shape in which an electrode tab 103 is provided on one surface of the collector 101, and the coating portion 120 may have a shape in which an active material 102 is applied to each of both surfaces of the collector 101. More specifically, a portion of the collector 101 to which the active material 102 is not applied may be the non-coating portion 110, and a portion to which the active material 102 is applied may be the coating portion 120. Here, the collector 101 may be a substantially thin plate-shaped negative electrode collector and may contain copper (Cu).

In order to explain in more detail the position at which the deformable part 130 is disposed in the wound electrode assembly 10, an arrangement relationship between the components of the electrode assembly 10 will first be described as follows. Referring to FIG. 4, the second electrode sheet 200 of the electrode assembly 10 according to Embodiment 1 of the present invention may be disposed at a position facing the coating portion 120 of the first electrode sheet 100 with the separator 30 therebetween. Specifically, the first electrode sheet 100 may begin to be wound first, and then the second electrode sheet 200 may be wound together.

The separator may be disposed between the first electrode sheet 100 and the second electrode sheet 200 to separate the first electrode sheet 100 and the second electrode sheet 200 from each other. In order to separate the first electrode sheet 100 and the second electrode sheet 200 from each other, the separator 300 may be additionally disposed during the winding process.

As an example of a configuration for suppressing the deformation of the electrode assembly 10, the first electrode sheet 100 according to Embodiment 1 of the present invention may further include a cover part 140.

Referring to FIG. 5, the cover part 140 may be attached to the non-coating portion 110 of the first electrode sheet 100 and may have thermosetting properties. Specifically, the cover part 140 may be a thermosetting tape. The thermosetting may mean properties of hardening when heat is applied.

In addition, the cover part 140 of the first electrode sheet 100 may have a thickness of approximately 40 µm or more and 100 µm or less. As described above, the cover part 140 may be the thermosetting tape. The cover part 140 having the thickness of 40 µm or more and 100 µm or less may be a thermosetting tape that is capable of being obtained relatively easily.

In the process of manufacturing the electrode assembly 10, a process of forming a center hole using a hot object may be performed to form an empty space in a center thereof. The cover part 140, which has the thermosetting properties, may be hardened by heat transmitted in this process. Specifically, the cover part 140 may be made of a material that begins to be hardened at a temperature of approximately 100 degrees Celsius.

The cover part 140 that is hardened by the heat may not only suppress the deformation of one end of the second electrode sheet 200, but also suppress deformation of the electrode assembly 10 itself by reinforcing its rigidity.

The cover part 140 may be formed by being attached from one end of the first electrode sheet 100 or may be formed by being attached from a point that is away from the one end by approximately 3 to 4 mm for process efficiency.

As an example of a configuration for efficiently suppressing the deformation of the electrode assembly 10, the cover part 140 of the first electrode sheet 100 according to Embodiment 1 of the present invention includes a first cover part 141 and a second cover part 141. The first cover part 141 may be attached to one surface of the non-coating portion 110 to cover a portion of the electrode tab 103, and the second cover part 142 may be attached to the other surface of the non-coating portion 110. Thus, the first cover part 141 and the second cover part 142 may be attached to both surfaces of the collector 101 with the collector 101 therebetween, respectively. Here, the first cover part 141 may be attached to the collector 101 by a length less than that of the second cover part 142.

Since the first cover part 141 and the second cover part 142 are disposed on both the surfaces, a degree to which the cover part 140 suppresses the deformation of the electrode assembly 10 may be strengthened.

As an example of a configuration for suppressing the deformation of the electrode assembly 10 in a relatively wide range, the cover part 140 of the first electrode sheet 100 according to Embodiment 1 of the present invention may be attached to be wound at least once. That is, in the wound state, the non-coating portion 110 of the first electrode sheet 100 may be wound once or more.

When the cover part 140 is attached at least once, the deformation of the electrode assembly 10 over a wide range may be suppressed.

Since the deformable part 130 is a portion that induces the deformation of the second electrode sheet 200 instead of deforming one end of the second electrode sheet 200, the cover part 140 may not be attached. Thus, the deformable part 130 according to Embodiment 1 of the present invention may be disposed between the non-coating portion 110 and the coating portion 120 so that the cover part 140 is easily attached only to the non-coating portion 110. Specifically, referring to FIG. 5, the first electrode sheet 100 may be disposed in order of the non-coating portion 110, the deformable part 130, and the coating portion 120 from one end thereof. Here, for convenience of explanation, a portion on which the active material 102 is not applied, excluding the deformable part 130, may be expressed as the non-coating portion 110. However, more accurately, the deformable part 130 may be a portion of the non-coating portion 110. That is, the deformable part 130 may be disposed on an end of the non-coating portion 110, which is adjacent to the coating portion 120. Thus, the deformable part 130 may be disposed to be spaced apart from an electrode tab 103 between the electrode tab 103 and the coating portion 120 in the non-coating portion 110.

The electrode assembly 10 according to Embodiment 1 of the present invention may suppress the deformation near the end of the second electrode sheet 200 by allowing the deformable part 130 to be deformed as a usage time of the secondary battery increases, thereby preventing the adjacent separator 300 from being deformed. In addition, the separator 300 may be prevented from being damaged to improve safety and performance of the secondary battery including the electrode assembly 10.

The secondary battery having the improved safety and performance may be manufactured by accommodating the electrode assembly 10 according to Embodiment 1 of the present invention in the wound state into an exterior. Here, the secondary battery may be a cylindrical secondary battery, and the exterior may have a substantially cylindrical can shape.

### Embodiment 2

The present invention provides an electrode assembly including a first electrode sheet 100' having a different type as Embodiment 2.

The first electrode sheet 100' of the electrode assembly according to Embodiment 2 of the present invention may be different from the first electrode sheet 100 according to Embodiment 1 in presence or absence of the fixing part 150, etc.

Hereinafter, a detailed description of the same configuration as that of the electrode assembly 10 according to Embodiment 1 of the present invention will be omitted.

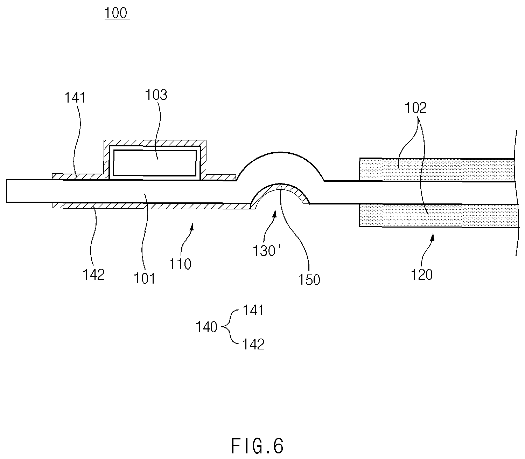

FIG. 6 is a schematic side view of the first electrode sheet 100' according to Embodiment 2 of the present invention.

The first electrode sheet 100' of the electrode assembly according to Embodiment 2 of the present invention may further include a fixing part 150 attached to a deformable part 130'. Specifically, the fixing part 150 may be attached to a surface of the deformation part 130' that is opposite to a direction, in which the deforming part 130' protrudes, and may have thermosetting properties like the cover part 140. Here, the fixing part 150 may be a thermosetting tape. In addition, the fixing part 150 may have a thickness of approximately 40 µm or more and 100 µm or less, like the cover part 140 described above.

Like the cover part 140, the fixing part 150 may be hardened by heat transmitted in a process of forming a center hole using a hot object to form an empty space in a center during the process of manufacturing the electrode assembly. Specifically, the fixing part 150 may be made of a material that begins to be hardened at a temperature of an approximately 100 degrees Celsius..

Referring to FIG. 6, the fixing part 150 may be attached to a concave surface of the deformable part 130'. Thus, the electrode assembly according to Embodiment 2 of the present invention may include the fixing part 150 to induce deformation of the deformable part 130' in a direction toward the convex surface.

In this regard, when the fixing part 150 is hardened by heat in the deformable part 130', the convex surface to which the fixing part 150 is not attached may have a relatively identical shape compared to the other concave surface to which the fixing part 150 is attached, and thus, fixing force for the fixing may become weak. Thus, the first electrode sheet may be relatively efficiently induced to be deformed in the direction of one surface to which the deformable part 130' is not attached.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

1: Conventional electrode assembly
2: Conventional first electrode sheet
10: Electrode assembly
100, 100': First electrode sheet
101: Collector
102: Active material
103: Electrode tab
110: Non-coating portion
120: Coating portion
130, 130': Deformable part
140: Cover part
141: First cover part
142: Second cover part
150: Fixing part
200: Second electrode sheet
300: Separator

## Claims

1. An electrode assembly having a structure, in which a first electrode sheet, a second electrode sheet, and a separator disposed between the first electrode sheet and the second electrode sheet are wound together,
wherein the first electrode sheet comprises a deformable part disposed to be spaced a predetermined distance from one end of the second electrode sheet in a winding direction and having a shape that protrudes toward a central portion with respect to the wound state.

2. The electrode assembly of claim 1, wherein the first electrode sheet comprises:
a non-coating portion disposed on one end and having a shape in which an electrode tab is provided on one surface of a collector; and
a coating portion having a shape in which an active material is applied on each of both surfaces of the collector.

3. The electrode assembly of claim 2, wherein the second electrode sheet is disposed at a position that faces the coating portion of the first electrode sheet with the separator therebetween.

4. The electrode assembly of claim 2, wherein the deformable part is disposed to be spaced apart from the electrode tab between the electrode tab and the coating portion in the non-coating portion.

5. The electrode assembly of claim 2, wherein the first electrode sheet further comprises a cover part attached to the non-coating portion, and
the cover part has thermosetting properties.

6. The electrode assembly of claim 5, wherein the cover part is attached at least once or more.

7. The electrode assembly of claim 5, wherein the cover part has a thickness of 40 µm or more to 100 µm or less.

8. The electrode assembly of claim 5, wherein the cover part comprises:
a first cover part attached to one surface of the non-coating portion to cover a portion of the electrode tab; and
a second cover part attached to the other surface of the non-coating portion.

9. The electrode assembly of claim 8, wherein the first cover part is attached by a length less than that of the second cover part.

10. The electrode assembly of claim 1, wherein the first electrode sheet further comprises a fixing part attached to a surface of the deformable part that is opposite to a direction in which the deformable part protrudes.

11. The electrode assembly of claim 1, wherein the deformable part has a shape bent while being maintained at a constant curvature radius.

12. The electrode assembly of claim 11, wherein the deformable part has a curvature radius of 0.05 mm or more and 0.8 mm or less.

13. The electrode assembly of claim 1, wherein the first electrode sheet is induced so that a degree of deformation of the deformable part increases as a usage time increases.

14. A secondary battery comprising:
an electrode assembly having a structure in which a first electrode sheet, a second electrode sheet, and a separator disposed between the first electrode sheet and the second electrode sheet are wound together; and
an exterior configured to accommodate the electrode assembly therein,
wherein the first electrode sheet comprises a deformable part disposed to be spaced a predetermined distance from one end of the second electrode sheet and having a shape that protrudes toward a central portion with respect to the wound state.
